Europäisches Patentamt

European Patent Office

Office européen des brevets

(19)

(11) Publication number: **0 141 645**
**A2**

(12) **EUROPEAN PATENT APPLICATION**

(21) Application number: 84307495.6

(51) Int. Cl.⁴: **A 23 K 1/18**

(22) Date of filing: 31.10.84

(30) Priority: 07.11.83 US 549352
29.05.84 US 614601

(43) Date of publication of application: 15.05.85
Bulletin 85/20

(84) Designated Contracting States: **AT BE CH DE FR GB IT LI LU NL SE**

(71) Applicant: NABISCO BRANDS INC., Nabisco Brands Plaza, Parsippany New Jersey 07054 (US)

(72) Inventor: Gellman, Gary, 20 Lillian Street, Pomona, NY 10970 (US)
Inventor: Erfurt, George A., Schoolhouse Lane, Morristown, NJ 07960 (US)
Inventor: Roe, James E., 560 Pines Lake Drive West, Wayne, NJ 07470 (US)

(74) Representative: Cole, David John, Executive Liaison Services Romelle, Orchard Lane, East Molesey, Surrey KT8 OBN (GB)

(54) Canine biscuit containing discrete particles of meat and other materials and method for making same.

(57) A dry hard canine biscuit having visually apparent, discrete particles, which contain (i) meat an/or meat by-product and optionally (ii) farinaceous material and/or textured vegetable protein, distributed substantially uniformly throughout the biscuit. The dog biscuit is obtained by blending the non-fat solids portion of the canine biscuit dough with the particles which are substantially inert with respect to the dog biscuit dough, mixing the dry-blended mixture with water and with the fat portion of the pet biscuit dough to form a dough, forming the dough using low shear into pieces, and baking and drying the formed pieces to obtain a microbiologically stable product which can be packaged without a barrier material. The particle inertness is made possible by using particles having: (i) a moisture content of 35 percent by weight or less and (2) a water activity which is less than the water activity of said biscuit dough. There is a substantial absence of particle color bleed into the biscuit. An example of the textured vegetable protein is textured soy protein; and an example of the farinaceous material is wheat. The discrete, visually apparent dehydrated particles enhance the palatability and visual attractiveness of the dry biscuit.

## CANINE BISCUIT CONTAINING DISCRETE
## PARTICLES OF MEAT AND OTHER MATERIALS
## AND METHOD FOR MAKING SAME

## BACKGROUND OF THE INVENTION

The invention relates to a method for incorporating animal protein into a biscuit dough to obtain a dry, hard canine biscuit having animal protein particles which are visually apparent as discrete particles and which are distributed substantially uniformly throughout the biscuit. The invention also relates to a dry, hard canine biscuit containing discrete animal protein particles. The invention products have enhanced palatability and enhanced eye appeal. The invention further relates to a method of preparing such particles.

## BROAD DESCRIPTION OF THE INVENTION

An object of the invention is to provide dry hard canine biscuits which contain meat and/or meat by-products plus optionally farinaceous material and/or textured vegetable protein, distributed substantially uniformly throughout the biscuits. Another object of the invention is to provide a method for making such dry hard canine biscuits. A further object of the invention is to provide dry hard canine biscuits and method of producing such biscuits which overcomes the disadvantages of the prior art. A still further object of the invention is to provide a process for making such particles. Other objects and advantages of the prior art are set out herein or obvious herefrom to one ordinarily skilled in the art.

The objects and advantages of the invention are achieved by the dry hard canine biscuit and the production method of the invention.

According to the invention, there is provided a dry hard canine biscuit having discrete particles, which contain meat and/or meat by-product particles and which can also contain farinaceous material and/or textured vegetable protein, distributed substantially uniformly throughout the biscuit. The particles are visually apparent as discrete particles, do not separate from the remaining, or farinaceous portion of the biscuit during shipping, and enhance the palatability of the biscuit by providing a flavor impact. The product is highly stable and can be packaged directly into a paper board box. The method for making the dry hard canine biscuit of the present invention is economical, does not involve the use of high pressure and/or high shear to compact the biscuit dough as in U.S. Patent Nos. 4,145,447 and 4,229,485, avoids substantial bleeding of the animal protein color into the farinaceous material, maintains particle discreteness and achieves substantially uniform distribution of the particles throughout the biscuit. Even with the inclusion of farinaceous material and/or textured vegetable protein in the particles, there is not any loss of discreteness of the particles in the final dry hard canine biscuit. Suitable food-pet food grade dyes are used for the formation of the particles in order to color dark brown the farinaceous material and/or textured vegetable protein in the particles. Such dye does not run, bleed or the like when the particles are incorporated into the final biscuit. It is not necessary to use a food grade dye in the particles if they contain only meat and/or meat by-product.

The invention also includes a method for making a dry hard  canine biscuit having enhanced palatability and enhanced eye appeal. Discrete particles, which contain meat and/or meat by-product and which can also contain farinaceous material and/or textured vegetable protein are distributed substantially uniformly throughout the dry biscuit and are visually apparent to the consumer as discrete particles. The presence of meat-containing particles substantially above or on the biscuit surface is kept to a minimum to reduce the opportunity for meat particle loss from physical abuse during transit. This particle distribution is accomplished by first dry-blending the meat particles with the non-fat solids portion of a biscuit dough, admixing the dry-blended mixture with water and then adding the fat portion of the biscuit dough to form a dough. The invention process forms the dough using low pressure and/or low-shear (preferably as little pressure and/or shear as possible) forming means or techniques. Alternatively, the water and fat can be admixed simultaneously with the dry-blended mixture. Meat and/or meat by-product containing particle visual awareness and biscuit hardness maintenance are achieved by using particles which are inert with respect to the biscuit dough. Meat and/or meat by-product containing particle inertness is made possible through the use of particles: (a) having a moisture content of 35 percent by weight or less; and (b) having a water activity which is less than the water activity of the biscuit dough during mixing, if the biscuit dough ingredients were mixed without particles containing the meat and/or by-product.

In the production of known dry pet food products, the use of wet meat products cause substantial smearing or blending of the meat into the farinaceous material. It also causes bleeding of the protein colors into the farinaceous material which reduces the visual attractiveness of the product to the consumer and which reduces the hardness of the product.

The invention further includes a process for preparing the particles which contain meat and/or meat by-product plus farinaceous material and/or textured vegetable protein. The inclusion of the non-meat by-product material in the particles provides a significant cost reduction as compared to all meat and/or meat by-product particles. Particles of meat and/or meat by-product plus farinaceous material plus textured vegetable protein, which are stable, cohesive and have particle integrity as such or in a biscuit, is unexpected to the art.

The process for preparing the dry, cohesive particles, which contain meat and/or meat by-product plus farinaceous material and/or textured vegetable protein, includes admixing the meat in particulate form and/or meat-by product in particulate form with the farinaceous material in particulate form and/or the vegetable protein in particulate form. The admixture is formed by mechanically working the mass at conditions of elevated temperature above about 212°F. (about 100°C.) and pressure for a time sufficient to convert the mass into a flowable substance and extruding the flowable substance through a restricted orifice. The extrudate is particulated and the particles are dried to form dry, cohesive particles.

## DETAILED DESCRIPTION OF THE INVENTION

The dry, hard canine biscuit of the invention comprises discrete, visually-apparent particles, which contain meat and/or meat by-product and which can also contain farinaceous material and/or textured vegetable protein, which are uniformly distributed throughout the biscuit. The remaining, or non-meat and/or non-meat by-product particle portion of the biscuit is substantially free of meat particle color. The biscuits are very stable microbiologically, and can be stored without refrigeration and without a packaging barrier material such as plastic film. The biscuit can be in various shapes such as square, round, triangular, animal-shaped and the like. The preferred shapes are round, T-bone shape, kidney shape, and a chop or steak-like shape. The biscuits can have a thickness typical of canine biscuits. A preferred thickness is about 1/2 inch (1.27 cm).

The particles containing meat and/or meat by-product used in the invention can be in the form of specs, flakes, chunks, chips, granules and the like. Herein, unless otherwise noted, the phrase "particles containing meat and/or meat by-product" or its equivalent wording is meant to include the optional partial substitution by the farinaceous material and/or textured vegetable protein for the meat and/or meat by-product in the particles. The particles should be of sufficient size so as to be visually apparent to the consumer as discrete particles when in the biscuit of the invention. Prior to incorporation into the biscuit, the meat and/or by-product particles should preferably have a diameter of granulation of between about 1/32 inch (about 0.0794 cm) and about 1/2 inch (about 1.27 cm). The final biscuit will have particles approximately in this size range too. Mixtures of particles within this size range or particles having a given size within this range can be used.

Particle visual awareness and biscuit hardness maintenance are achieved by using meat and/or meat by-products particles which are inert with respect to the biscuit. By meat and/or meat by-product particle "inertness" is meant: (a) the particle does not smear into the biscuit dough and retains its integrity through production of the final product; (b) that the color of the particles containing meat and/or meat by-product particle does not substantially bleed into the biscuit dough (including any dye or colorant added to color dark brown the farinaceous material and/or textured vegetable protein included in the particles); and (c) that ingredients, including any farinaceous material and/or textured vegetable protein substitutes, within the particles containing meat and/or meat by-product do not adversely affect the hardness and microbiological stability of the final biscuit product.

Meat and/or meat by-product particle inertness is made possible by using meat and/or meat by-product particles having: (1) a moisture content of about 35 percent by weight or less; and (2) a water activity which is less than the water actvity of the biscuit dough during mixing of the dough, if the biscuit dough ingredients were mixed without the meat or meat by-product particles. The lower water activity of the meat and/or meat by-product particles substantially prevents the flow of water and protein color from the particles to the dough during mixing of the dough ingredients and the particles. Higher moisture content and water activity above that of the dough would cause smearing of the softer particles into the dough, thereby losing meat and/or meat by-product particle integrity. Also, higher moisture contents could create hardness reduction by the formation of steam pockets which turn into air voids upon biscuit leavening. The discreteness of the particles is locked in during drying of the dough.

Fresh meat and/or meat by-products can be dehydrated by known methods to achieve a moisture content of less than about 35 percent by weight. Dehydration also reduces the water activity of the meat and/or meat by-products. Generally, fresh beef has a moisture content of about 65 percent by weight and a water activity of about 1.0.  Dehydrating the fresh meat to a moisture content of about 40 percent results in a water activity of about 0.8.  Dehydration to about 12 to 20 percent by weight of water results in a water activity for the meat of about 0.7 and lower.  Biscuit doughs generally have a water activity of about 0.90 and above upon completion of mixing of the non-fat solids portion, the water and the fat portion of the dough.  Preferably meat and/or meat by-products having a moisture content of less than or equal to about 20 percent by weight are used because they remain shelf stable without refrigeration prior to incorporation into the biscuit.

Microbiological stability of the meat and/or meat by-product containing particle ingredient is preferably achieved through a low water activity of 0.70 or less.  This low water activity is preferably achieved by dehydration.  However, the water activity can also be lowered by other processes known in the art.  For example, to reduce the water activity, food additives conventionally used for this purpose, such as glycerin, propylene glycol, salt, corn syrup, sugar and the like, can be included in the meat and/or meat by-product particles in conventional amounts.

Commercially available meats and/or meat by-products having the above low water activity can be used for the meat and/or meat by-product particle ingredient of the invention. Microbiological stability of the meat and/or meat by-products can be also be achieved even at water activities above 0.70 by the use of antimycotics and/or antibiotics conventionally used in the art for this purpose. Exemplary of the antimycotics which can be used are potassium sorbate, sorbic acid, sodium benzoate and the like. Suitable commercially-available meat products and/or meat by-products which can be used are those which are stored without refrigeration and are packaged in a film having a transfer rate of no more than 5 g per sq. cm per 24 hours water vapor. The meat and/or meat by-product particles are preferably also in compliance with NRC nutritional requirements such as 40 percent minimum protein content.

The substantial absence of color bleed by the particles containing meat and/or meat by-product into the biscuit is principally due to the use of meat products wherein the color is formed as part of the protein matrix. In these meat products the protein is present in its least soluble form, namely denatured and coagulated, and therefore the color is also insoluble. Accordingly, bleeding of the meat protein color into the remaining portion of the biscuit cannot take place. The subject of lack of color bleed when farinaceous material and/or textured vegetable protein is used in place of some of the meat and/or meat by-product is treated below.

Visual awareness of the meat particles is also effected by using meat products having a dark brown denatured meat protein color. Products having a denatured meat protein color as measured by an Agtron reflectance value of 10 or less contrasts excellently with typical biscuit doughs to effect visual awareness.

The term "meat" is understood to apply not only to the flesh of cattle, swine, sheep, goats, horses and whales, but also to other sources of animal protein, such as poultry and fish. The term "meat by-product" refers to those non-rendered parts of the carcasses of slaughtered animals, including but not restricted to mammals, poultry and fish, and includes constituents such as liver, kidney, heart, spleen, tongue, trimmings, lungs and skins, embraced by the term "meat by-products" in the Official Publication, "Official and Tentative Definitions of Feed Ingredients," published by the Association of American Feed Control Officials, Inc., (1979), p. 94. The flesh of some animals, such as fish and poultry, may be too light in color to provide sufficient contrast with the biscuit dough so as to enhance visual awareness of the meat particles. In this case, known food colorings can be added to the meat to enhance visual awareness. The meat particles and the meat by-product particles can be used alone or in combination. Each particle can contain both meat and meat by-products from one or more animals.

The preferred particles containing meat and/or by-product are particles of dehyrated cured meat and meat by-products, most preferably from beef. Spiced, dehydrated cured meat and meat by-product particles are highly palatable, have an appetizing odor and are particularly preferred for use in the canine biscuits of invention. The preparation of dehydrated cured meat, spiced or unspiced, is well-known in the art and does not form a part of the invention. Suitable dehydrated cured meat is commercially available and is commonly referred to as jerky, jerked beef or jerked meat.

Commercially available, dehydrated cured meat products which contain more than 35 percent of moisture can be dried in a conventional manner to within the above moisture content range.

Known biscuit dough formulations for the preparation of dry hard canine biscuits can be used in the production of the biscuits of the invention. As indicated above, these doughs generally have a water activity of about 0.90 and above upon completion of mixing of the dough ingredients. A suitable dough contains farinaceous material, an edible oil, an antioxidant, an antimycotic, salt, animal fat, and added vitamins and minerals, such as those disclosed in U.S. Patent No. 4,229,485 at column 5, lines 7 to 57. The compositions of the invention also preferably contain at least one animal-derived proteinaceous meal such as meat meal, bone meal and fish meal. A preferred biscuit dough for producing the biscuits of the invention contains about 50 to about 60 percent by weight of wheat flour, about 5 to about 10 percent by weight of soybean meal, about 3 to about 10 percent by weight of meat and bone meal, about 1 to about 5 percent by weight of wheat meal, about 1 to about 5 percent by weight of animal fat preserved with BHA, about 20 to about 30 percent by weight of water, and about 2 to about 5 percent by weight of natural flavors, vitamin and mineral preblend, and acidulant. More generally, useful biscuit doughs can contain about 15 to about 35 percent by weight of water and about 0.5 to about 10 percent by weight of fat.

The relative amount of the meat and/or meat by-product particles and the biscuit dough should be such so as to result in a dried biscuit product wherein the weight percent of the particles is about 3 to about 15 percent by weight, preferably about 5 to 10 percent by weight, of the final dried biscuit product. Compliance to NRC nutritional requirements is enhanced by even these low levels of the 40 percent minimum protein meat and/or meat by-product containing particle. Lower or higher levels of the meat particles can be used provided biscuit integrity is maintained, the meat particles do not extend appreciably above the surface of the biscuit so as to separate from the biscuit during shipment, the final product remains visually attractive to the consumer, and the product is economical to produce.

In producing the dry, hard canine biscuit of the invention the meat and/or meat by-product particles are blended with the solid non-fat portion of the biscuit dough. By incorporating the meat particles into the solid non-fat portion of the biscuit dough, the meat particles are distributed substantially uniformly throughout the final biscuit product. The portion of the particles at the surface of the biscuit are visually apparent as discrete particles. Particles substantially below the surface however are also of sufficient size and integrity to be visually apparent as discrete particles upon breaking the biscuit in two, for example.

All mixing can be done at 20 to 100 rpm. The dry-blending step is typically conducted at room temperature for a period of time of about 3 minutes to about 10 minutes so as to obtain a uniform mixture of the meat and/or meat by-product particles and non-fat portion of the biscuit dough. The dry-blended mixture is then mixed with the hot water to form a first stage dough. This methodology minimizes the occurence of meat and/or meat by-product particles substantially above and on the final biscuit surface. As a result, the opportunity for meat and/or meat by-product particle loss from physical abuse during transit is reduced. The water which is admixed with the dry-blended mixture is typically at a temperature of about 65°F. (about 18°C.) to about 150°F (about 66°C.). The hot water is added, with mixing, over a period of time of about 3 minutes to about 5 minutes to form the first stage dough. Then the fat portion of the biscuit dough is admixed with the first stage dough to form the final stage dough. The fat portion is added at a temperature at which it is at least fluid, typically at about 100°F. (about 38°C.) to about 150°F (about 66°C.). The fat portion is mixed for a period of time which is sufficient to form a dough whose homogeneity is visually apparent. A typical final mixing time is about 3 minutes to about 5 minutes.

Formation of the dough is achieved at about atmospheric pressure with mixing of the components being conveniently achieved in an upright sigma blade mixer or other bakery-type mixers. The various ingredients can be added over a period of time or in a one-shot manner according to the above order of addition. However, melted fat and water may be added simultaneously and mixed 6 to 10 minutes.

The dough is then formed into pieces by machining on a rotary molder with specific die shapes. The dough can also be formed into pieces by sheeting followed by either a vertical or rotary cutter or by a rotary molder. Hardness of the final biscuit is enhanced by sheeting the dough prior to cutting or molding. Suitable die and cutter shapes are those which result in a round, square, triangular, T-bone or chop shaped biscuit product and the like. The forming is accomplished at conventional temperatures of ambient to 110°F. (about 43°C.) and pressures of less than 75 p.s.i. (gauge), used with for example a rotary molder, a vertical cutter of rotary cutter. [75 p.s.i. (guage) is about 5.273 kg per $cm^2$ (gauge).] An essential or critical feature of the invention is that the forming of the dough piece is done using low shear and/or low pressure forming means or techniques. High shear or high pressure forming will decimate or smear the meat and/or meat by-products containing particles and/or will cause bleeding or running of any dye used in the particles. The forming pressure is less than 75 p.s.i.g.

The formed pieces are then baked, followed by drying, to achieve a shelf stable product without the need of a moisture barrier protection. Baking and drying temperatures and times are those conventionally used in the production of a hard, dry canine biscuit. The pieces are dried to obtain a biscuit having a water activity of 0.70 or less. Typical baking temperatures and times are about 300°F. (about 149°C.) to about 475°F. (about 246°C.) for about 25 minutes to about 8 minutes. Drying conditions are typically about 200°F. (about 93°C.) to about 325°F. (about 163°C.) for about 25 minutes to about 12 minutes in a forced air dryer. On a weight basis, the moisture content of the final biscuit product is less than or equal to about 15 percent by weight and preferably about 10 to about 12 percent by weight of the final biscuit at 0.70 percent water activity.

While typically adding meat to a biscuit softens it, the final dried biscuits of the invention should be sufficiently hard to stimulate the jaw bones and clean the teeth of canines. The hardness of the final biscuit of the invention as measured in a cracking test on a Dillon dynamometer should be about 30 to about 50 lbs. for a 1/2 inch (1.27 cm) thick sample using a pinpoint tester having a 3/32 inch diameter tip. The tip has a concave bottom with a maximum depth of 1/16 inch. In this test, the hardness reading in pounds is linearly proportional to the sample thickness. Thus, a 1/4 inch (0.635 cm) thick sample should have a hardness of about 15 to about 25 lbs. An essential or critical feature of the invention is that the forming of the hard dough pieces is done using low shear and/or low pressure forming techniques. High shear or high pressure forming will decimate or smear the meat and/or meat by-product particles and/or will cause bleeding or running of any dye used in the particles. The forming pressure is less than 75 p.s.i.g.

Non-cooking forming conditions herein means that the forming is achieved at a temperature whereby none of the protein in the hard dough material is denatured and none of the starch in the hard dough material is gelatinized. Low-shear forming conditions herein means that forming is achieved at 25 sec.$^{-1}$ or less, preferably less than 20 sec.$^{-1}$. (High shear herein means greater than 25 sec.$^{-1}$, which excludes the use of high-shear cooler extruders in the invention.) See Rossen & Miller, "Food Extrusion", Food Technology, Aug. 1973, pages 46 to 53, (especially page 52).

The invention also broadly involves a process for preparing dry, cohesive particles, which contain meat and/or meat by-product plus farinaceous material and/or textured vegetable protein, for inclusion in the canine biscuit. The meat in particulate form and/or meat by-product in particulate form is admixed with the farinaceous material in particulate form and/or the textured vegetable protein. The admixture is formed by mechanically working the mass at conditions of elevated temperature above about 212°F. (about 100°C.) and pressure for a time sufficient to convert the mass into particles and the particles are dried to form said dry, cohesive particles.

The particles can have up to 99 percent by weight, preferably from 10 to 80 percent by weight, and most preferably 33 to 68 percent by weight, of the meat and/or meat by-product replaced by the farinaceous material and/or textured vegetable protein. In some instances all of the meat and/or meat by-product can be replaced by the farinaceous material and/or textured vegetable protein. The inclusion of the non-meat material in the particles provides a sufficient cost reduction as compared to all meat and/or meat by-product particles. Particles of meat and/or meat by-product

0141645

plus farinaceous material plus textured vegetable protein which are stable, cohesive and have particle integrity as such are in a biscuit, are unexpected to the art.

Except as set out herein, the information herein concerning the particles containing only meat and/or meat by-product and the stiff dough and hard biscuits containing such particles applies to the particles containing meat and/or meat by-product plus farinaceous material and/or textured vegetable protein, and the stiff dough and hard biscuits containing such particles.

As used herein the phrase "farinaceous material" means those grain foodstuffs containing a preponderance of starch or starch-like material. Examples of useful farinaceous grain materials are wheat, corn, oats, rye, barley, milo, rice, other cereal grains and starch from such cereal grains. The useful forms are in particulate form, such as the farinaceous meals or flours obtained upon grinding cereal grains such as corn, oats, wheat, milo, barley, rice and the various milling by-products of the cereal grains, such as wheat feed flour, wheat middlings, wheat mixed feed, wheat shorts, wheat rod dog, oat groats, hominy feed, and any other such material. Also included are protein concentrates farinaceous ingredients such as wheat and corn gluten.

Preferably the farinaceous material is wheat and preferably the farinaceous material is used in flour form.

Any texturized vegetable protein can be used. Examples of useful vegetable proteins which can be textured are soybeans, soy protein isolates, soy protein concentrates, cottonseed, cottonseed protein isolates, peanuts, peanut protein isolates, sunflower seed, lentils, sesame, rapeseed, safflower seed, peanut protein concentrates, and other vegetable oil seeds and beans. The vegetable proteins are used in particulate form such as meal and flour. Preferably the vegetable protein is soy (preferably in flour form). The vegetable protein is texturized during treatment forming of the particle composition in the cooker extruder.

If desired, textured vegetable protein can be used in place of the untextured vegetable protein. Particle forming in such instance can be done using pellet mills and the like.

The farinaceous material and the textured vegetable protein can be used separately or in combination.

A food-pet food grade dye or colorant is preferably used to dye the farinaceous material and/or textured (or texturizable) vegetable protein. Preferably an artificial or synthetic food grade dye is used in combination with drug cosmetic dyes approved for use in pet foods. Examples of pet food dyes are brown and black iron oxide. The main criterion of a useful food-pet food grade dye should be used which has a very high degree of fastness for the farinaceous material and/or textured vegetable protein. The water-soluble food-pet food dyes can be used as such or can be used emulsified in oil or fat to color the farinaceous material and/or textured vegetable protein.

When preparing a particle containing meat and farinaceous material, preferably the particle composition contains 27 to 32 percent by weight (most preferably about 29 percent by weight) of meat, 45 to 60 percent by weight (most perferably about 51 percent by weight) of farinaceous material, 10 to 20 percent by weight (most preferably about 14 percent by weight) of proteinaceous-flavoring premix, 2 to 8 percent by weight (most preferably about 5.5 percent by weight) of seasoning and 0.1 to 2 percent by weight (most preferably about 0.5 percent by weight) of colorant. The proteinaceous-flavoring premix preferably contains 40 to 65 percent by weight (most preferably about 54 percent by weight) of protein, usually soy, and 35 to 60 percent by weight (most preferably about 46 percent by weight) of flavorant(s). The particle composition can optionally contain up to about 10 percent by weight, generally 5 to 10 percent by weight of fat.

When preparing a particle containing meat and vegetable protein, preferably the particle composition contains 27 to 32 percent by weight (most preferably about 29 percent by weight) of meat, 60 to 70 percent by weight (most preferably about 65 percent by weight) of vegetable protein, 2 to 8 percent by weight (most preferably about 5.5 percent by weight) of seasoning and 0.1 to 2 percent by weight (most preferably about 0.5 percent by weight) of colorant. The particle composition can optionally contain up to about 10 percent by weight, generally 5 to 10 percent by weight of fat.

Preferably the particulated meat is prepared by particulating frozen meat, and preferably the particulating is achieved by chopping and then grinding the frozen meat.

In one embodiment all of the ingredients are thoroughly admixed, for example, in a blender. Preferably the ingredients are preconditioned during mixing in a blender which has a jacketed heater or a steam injector. The mixture is fed into a hopper of a cooker extruder.

In another embodiment the meat, about half of the seasoning and the optional fat are thoroughly admixed for example in a blender. Preferably such first mixture is preconditioned during mixing in a blender which has a jacketed heater or a steam injector. The other half of the seasoning and the remainder of the ingredients are mixed to form a second mixture. The first and second mixtures are separately and simulataneously fed into a hopper of a cooker extruder. The two mixtures are mixed by the action of the extruder. Instead of using the second mixture as such, the ingredients of the second mixture can be separately fed into the hopper.

The blended mixture is then extrusion cooked at conditions of elevated temperature and pressure at about 212°F. (about 100°C.) to about 400°F. (about 204°C.) and about 15 p.s.i.g. (about 1.055 kg per $cm^2$) to about 300 p.s.i.g. (about 21.09 kg per $cm^2$) respectively. The process of this invention may be practiced in a conventional cooker extrusion device. The rotating screw of the extruder device creates a high pressure on a material mixed in the extruder. It is believed that the particular material changes form until it finally flows in a generally fluent manner, even squeezing around the outer periphery of the screw in a recirculating fashion column to cause a severe mechanical working of the substance. The pressures in the extruder are elevated to about 100 p.s.i.g. (about 7.03 kg per $cm_2$) and typically

will fall within the range of 100 p.s.i.g. (about 7.03 kg per cm2) to 200 p.s.i.g. (about 14.06 kg per $cm^2$). All of the pressure and the high temperatures result from the friction between the flowing products and components of the extruder. During the extrusion operation, cooling water is passed through the rear and forward jacket for temperature control. The mixture is converted to a flowable substance which emerges from the nozzle of the extruder.

The unexpanded extrudate has a bulk density of about 30 lbs. per cubic food (480.54 kg per $m^3$). [A fully expanded extrudate would have a bulk density of about 5 lbs. per cubic foot (80.09 kg per $m^3$).] When the particle composition contains vegetable protein as replacement for part or all of meat and/or meat by-product, preferably the extrudate is partially expanded, having a bulk density of about (240.27 kg per $m^3$) to about 20 lbs. per cubic foot (320.36 kg per $m^3$). Partial expansion is achieved by convention extruding techniques.

The extruded material is cut into pieces or particles of having a diameter or granulation of between about 1/8 inch (about 0.318 cm) and about 1/2 inch (about 1.27 cm), preferably 3/16 inch (about 0.476 cm). The final hard biscuit will have particles approximately in this size range too. Mixtures of particles within this size range or particles having a given size within this range can be used. The extruded material can be particulated by an suitable means, but preferably staggered cutting blades are used which are located very close to the extruder die.

The extruded particles can be dried or can be dehydrated by known methods to achieve a moisture content of less than about 35 percent by weight. Dehydration also reduces the water activity of the meat and/or meat by-products. Preferably the particles are dehydrated to about 12 to 20 percent by weight water which results in a water activity for the meat of about 0.7 and lower.

The dried particles can be weighed and bagged for storage until usage. The dried particles are shelf stable without refrigeration prior to incorporation into the hard biscuit. The dehydrated particles, spiced or unspiced are highly palatable, have an appetizing odor and are particularly preferred for use in the hard canine biscuits of the invention. The dried particles do not smear into the hard biscuit dough and retain its integrity through production of the final product. The particle color does not substantially bleed into the hard biscuit dough.

The invention is further illustrated in the following examples wherein all percentages, parts, ratios and proportions are by weight and all temperatures are in °F., unless otherwise stated herein or otherwise obvious herefrom to one ordinarily skilled in the art.

### EXAMPLE 1

In this example, spiced dehydrated cured beef granules having a moisture content less than 35 percent by weight, a granulation between 1/32 of an inch and 1/2 inch, and having a dark brown denatured meat protein color of Agtron reflectance value of 10 or less were used. The spiced dehydrated cured meat granules were obtained by granulating dehydrated cured meat having the composition:

| Dehydrated Cured Meat | Pounds |
| --- | --- |
| Meat By-Products | 650 |
| Meat | 268 |
| Natural Flavors | 1 |
| Spices | 29 |
| Cure (Sodium Nitrate) | 1 |
| Potassium Sorbate | 0.5 |
| | 949.5 pounds |

Then, 75 pounds of the spiced dehydrated cured meat granules were combined with the non-fat solids portion of a biscuit dough, the fat portion of the biscuit dough and water to form a dough in accordance with the process of the invention. The ingredients, relative amounts, and the process for making the biscuits were:

| Biscuit and Meat Chips | Pounds |
|---|---|
| Wheat Flour | 940 |
| Soybean Meal | 135 |
| Dehydrated Cured Meat | 103 |
| Meat and Bone Meal | 100 |
| Wheat Meal | 40 |
| Animal Fat preserved with BHA | 32 |
| Natural Flavors | 17 |
| Vitamin and Mineral Preblend | 25 |
| Acidulant | 4 |
| Water | <u>490</u> |
| | 1886 pounds |

The dehydrated cured meat was dry-blended with the solid non-fat portion of the biscuit dough in an upright sigma blade mixer at 20 rpm for 10 minutes. Then, the 490 pounds of water at a temperature of 150°F. (about 66°C.)

was added together with fat at a temperature of 140°F. (60°C.) to the preblend and mixed for 6 minutes to form the dough. The dough was then machined on a rotary molder having a die engraved to a depth of 0.415 inch for the formation of approximately 1/2 inch thick round, T-bone and chop shapes. The formed places were then baked in a band oven for 9 minutes followed by drying at 250°F. (about 121°C.) for 20 minutes in a band dryer to achieve a dry, hard shelf stable product. The baking temperatures in the band oven were:

| Band Oven Baking Temperatures | Zone |
|---|---|
| 530°F | 1 |
| 530°F | 2 |
| 550°F | 3 |
| 540°F | 4 |
| 400°F | 5 |
| 520°F | 6 |
| Off | 7 |
| Off | 8 |
| Off | 9 |

The product was dump-packed into a carton without the need for moisture barrier protection.

Hardness tests on the product using a Dillon dynamometer as described above resulted in hardness readings in the range of 30 to 50 lbs.

The product and biscuits prepared in the same manner except for the inclusion of the meat granules were fed to dogs in 35 tests. The number of dogs in each test ranged from 11 to 32.

The feedings were for 3 consecutive days in a split plate for testing preference. The biscuits were fed as a treat 4 to 5 hours after each dog's main meal. The main meal supplied 100 percent of each dog's calorie demand. The biscuit containing the meat granules was preferred up to 8:1 indicating a statistically significant preference level.

## EXAMPLE 2

A Creusot Loire BC72 cooker extruder, having 1000 mm barrel, two barrel heaters and cooling means, was used. A base formula or mixture was mixed in a dry ribbon blender and then passed to the cooker extruder.

The base formula, on a per batch basis, was:

| Ingredients | Amount |
|---|---|
| Wheat flour | 58 lbs. 12 oz. |
| Soyabean meal | 8 lbs. 7 oz. |
| Natural flavors | 5 oz. |
| Wheat meal | 2 lbs. 8 oz. |
| Meat and bone meal | 6 lbs. 4 oz. |
| Salt | 10 oz. |
| Vitamin-mineral premix | 12 oz. |
| Natural flavors | 12 oz. |
| Acidulant | 103 grams |
| Tallow | 1lb. |
| | |
| Total | 76 lbs. 2 oz. |

All of the ingredients except the tallow were screened through a U.S. No. 10 Mesh screen. Beef jerky was used which went through a U.S. No. 4 Mesh screen and stayed on a U.S. No. 8 Mesh screen. All of the dry blend (base formula) was dry blended in the ribbon blender for 10 minutes. Depending on the particular experiment, various amounts of beef jerky particles were added to the mixture and the mixture was dry blended in a Hobart mixer. The tallow was then added to the subsequent mixture, followed by further dry blending to achieve a uniform mass

The specifics are as follows:

| Experiment No. | Amount of Jerky | Water Content of Jerky | Amount of Oil Sprayed in Jerky |
|---|---|---|---|
| H-1E | None | - | - |
| H-2E | 4 lbs. 2 ozs./ 76 lbs. 2 ozs. of base formula | 12% | 1% |
| H-3E | 4 lbs. 2 ozs./ 76 lbs. 2 ozs. of base formula | 25% | 1% |
| H-4E | 4 lbs. 2ozs./ 76 lbs. 2 ozs. of base formula | 35% | 1% |
| H-2RM+B | 17 lbs/1202 lbs. of base formula | 12% | None |
| H-2E+B | 17 gm/273 gm. of base formula | 12% | None |

34

0141645

H-5E+B      34 gm/273 gm. of

base formula        12%        None

Notes:

(a)  H means base formula according to the above-cited ingredient proportions.

(b)  RM+B means rotary molder followed by baking in a band oven

(c)  B means baking in a reel oven.

(d)  E means extrusion.

(e)  The oil was sprayed on the jerky granules to simulate the preferred teaching in in U.S. Patent No. 4,310,558 (Nahm), but the oil did not prevent the jerky granules from being decimated by the high-shear extrusion or from being torn apart upon exiting from the extruder dye as the dough product expanded.

The control (H-1E) and the three experiments representing Nahm (H-2E and H-4E) were subjected to high shear cooker extrusion after dry blending.  The data on the extrusion is

| Material Extruded | Extruder Pressure Die | Extruder Screw Speed | Extrudate Temp. | Percent Added $H_2O$ in Extruder |
|---|---|---|---|---|
| H-1E | 103 to 146 psig | 160 r.p.m. | 160°F. | 10 |
| H-2E | 150 psig | 115 r.p.m. | 166°F. | 15 |
| H-3E | 122 to 182 psig | 110 r.p.m. | 172°F. | 15 |
| H-4E | 160 to 186 psig | 190 r.p.m. | 176°F. | 15 |

Note:  The extrudate temperatures were all over 160°F., which is at least sufficient to denature the protein. The material in the extruder was at a higher temperature because there was a flash off of the water as it exited from the extruder.

Further data on the extrusions is:

| Material Extruded | Extruder Barrell Heaters(2) | Extruder $H_2O$ Coolant | Extruder Die Opening |
|---|---|---|---|
| H-1E | 183°, 132°F. | 131°F. | 3/8" x 3/16" |
| H-2E | 181°, 116°F. | 130°F. | 3/8" x 3/16" |
| H-3E | 182°, 100°F. | 130°F. | 3/8" x 3/16" |
| H-4E | 158°, 123°F. | 115°F. | 3/8" x 3/16" |

More data on the extrusion and drying is:

| Material Extruded | Cutter Blade Setting | Extruder Drive Load | Drying The Extrudate Temp. | Time |
|---|---|---|---|---|
| H-1E | 6 | 33 amps | 200°F. | 1.5 hr |
| H-2E | 6 | 51 amps | 200°F. | 1.5 hr |
| H-3E | 6 | 48 amps | 200°F. | 1.5 hr |
| H-4E | 6 | 53 amps | 200°F. | 1.5 hr |

Note:  The extrudates were dried in a Proctor Schwartz drier.

In addition to the above runs, experiment H-1E-1 was conducted the same as experiment H-1E except that the extruder pressure at the die was 250 p.s.i.g., and experiment H-2E-1 was conducted the same as experiment H-2E except that the extruder pressure at the die was 247 p.s.i.g.

The invention was represented by experiments H-2E+B and H-5E+B.  In each case the water content in the dough was 32 percent.  Extrusion was done in a low shear extruder (i.e., a meat grinder, "Kitchen Aid Grinder', with blades) using a die opening of 0.5 inch diameter. The manual cut off was 1 to 1.5 inch. The temperature of the extrudate was 90°F. (about 32°C.) and the actual pressure at the exit point at the back of the die was 30 to 40 p.s.i.g. The temperature of the dough processed in the low shear extruder never exceeded 105°F. (about 41°C.) and accordingly was not cooked in the low shear extruder. Both extruded materials were then baked in a reel oven at 350°F. (about 177°C.) for 36 minutes.

The invention was further represented by experiment H-2RM+B. The water content of the dough was 26 percent. The dough was compacted in a rotary molder at room temperature and at a pressure of less than 75 p.s.i.g. The compacted dough pieces were then baked in a band oven for 8 minutes using a starting temperature of 600°F. (about 316°C.), which fell to 200°F. (about 93°C.), and were dried for 20 minutes at 275°F (135°C.).

The pet food pieces prepared by the several experiments had the following characteristics:

| Experiment Number | Sensory Observations | Agtron Color (lower reading means a darker color) |
|---|---|---|
| H-1E | Light tan; rough surface. Slight porosity noted on surface regions; random, | 45 |

very small particles visible.

H-2E Darker tan; rougher surface with many backwards extending ridges over valleys. Porosity noted on surface regions. Essentially no jerky granules showing; a few randon, possibly smeared, very small particles. 43

H-1E-1 Light tan; rough surface. Slight porosity noted on surface regions; random, very small particles visible.

H-2E-1 Darker tan; rougher surface with any backwards extending ridges over valleys. Porosity noted on surface regions. Essentially no jerky

0141645

granules showing; a few random, possibly smeared, very small particles visible on the surface.

H-3E    Darker tan; rough surface with many backwards extending ridges over valleys. Porosity noted on surface regions. Essentially no jerky granules showing; a few random, possibly smeared, very small particles.    40

H-4E    Darker tan; extremely rough surface with any backwards extending ridges over valleys; poor definition. Porosity noted on surface regions. Essentially no jerky granules showing; a few random, possibly smeared, very    38

small particles.

H-2E+B                     Light, golden, brownish
                           tan; discrete, non-
                           smeared, large jerky
                           particle visible through-
                           out; there was good jerky
                           granule integrity through-
                           out.  Somewhat rough surface
                           with some backwards extending
                           ridges.  No visible porosity.

H-5E+B                     Light, golden, brownish
                           tan; discrete, non-
                           smeared, large jerky
                           particle visible through-
                           out; there was good jerky
                           granule integrity through-
                           out.  Somewhat rough surface
                           with some backwards extending
                           ridges.  No visible
                           porosity.

H-2RM+B                    Light, golden, tannish brown;
                           discrete, well defined, non-

smeared, large jerky granules, there was excellent jerky granule integrity throughout. Undulating, slightly pocked surface. Good color contrast between discrete jerk granules and remaining biscuit surface.


## EXAMPLE 3


In this example, special dehydrated meat granules containing farinaceous material was prepared. The formulation had the following composition:

| Ingredients | Percent |
|---|---|
| Meat | 29 |
| Farinaceous material | 51 |
| Proteinaceous/flavoring premix | 14 |
| Seasoning | 5.5 |
| Coloring | 0.5 |
| | 100 percent |

The proteinaceous/flavoring premix contained 54 percent protein (soy) and 46 percent flavoring. The composition further contained 7 percent of fat.

The meat was prepared from frozen meat (beef) which was chopped and ground. The farinaceous material was in flour form; the proteinaceous/flavoring agent was also in fine particle form. The color was synthetic brown food grade and brown pet food grade iron oxide dyes that had good fastness for the non-meat ingredients. All of the ingredients were thoroughly mixed (blended together) using a blender. Steam was injected into the mixture as it was blended to precondition it. The mixture was fed into the hopper of a cooker extruder.

The cooker extruder was a conventional cooker extruder having steam and water jackets. Cooling water at room temperature was passed through the cooling jackets. The screw in the extruder was rotated at about 450 rpm. The extruder cooked and formed the material, which was continuously passed through it. The protein in the material texturized by the heat, pressure, shear, etc. The material was continuously passed through the extruder die and then the extrudate cut into 3/16 inch pieces using staggered cutting blades. The extrudate was not expanded and had a bulk density of about 30 lbs/ft.$^3$. 95 percent of the particles passed through a -4 U.S. mesh screen and stayed on a +14 U.S. mesh screen. The other 5 percent was fines. The collected particles were dried to a moisture content of 14 percent by weight. The dried particles were cohesive, appetizing in appearance and color and stable when handled. The dried particles were weighed and bagged.

Some of the dried particles were then put into a dough like the one in Example 1 using the procedure of Example 1. The dough and particles were then formed as in Example 1 into various shapes, and baked and dried as in Example 1 to form dry, hard, shelf stable, 1/4-inch thick, canine biscuits. The particles in the dried final biscuit were visably discrete, had not smeared and did not show any color bleed.

### EXAMPLE 4

In this example, spiced dehydrated cured meat granules containing textured soy protein was prepared. The formula had the following composition:

| Ingredients | Percent |
|---|---|
| Meat | 29 |
| Vegetable protein (soy) | 65 |
| Seasoning | 5.5 |
| Color | 0.5 |
| | 100 percent |

The composition further contained 7 percent of fat.

The meat was prepared from frozen meat (beef) which was chopped and ground. The farinaceous material was in flour form; the proteinaceous/flavoring agent was also in fine particle form. the color was synthetic brown food and pet food grade dyes that had good fastness for the non-meat ingredients.

The meat, half of the seasoning and the optional fat were thoroughly mixed in a blender having a hot water jacket, to form a first mixture. The other half of the seasoning and the rest of the ingredients were mixed, to form a second mixture. The first and second mixtures were separately and simultaneously fed into the hopper of a cooler extruder.

The cooker extruder was a conventional cooker extruder having steam and water jackets. Cooling water at room temperature was passed through the cooling jackets. The screw in the extruder was rotated at about 400 rpm. The extruder cooked and formed the material, which was continuously passed through it. The vegetable protein in the mixture was texturized by the heat, pressure, shear, etc. The material was continuously passed through the extruder die and the extrudate cut into 3/16 inch pieces using staggered cutting blades. The extrudate was partially expanded (using a proper size die to achieve such upon exit to atmospheric pressure) and had a bulk density of about 20 lbs/ft$^3$. The collected particles were dried to a moisture content of 14 percent by weight. The dried particles were cohesive, appetizing in appearance and color, and stable when handled. The dried particles were weighed and bagged.

Some of the dried particles were then put into a dough like the one in Example 1 using the procedure of Example 1. The dough and particles were then formed as in Example 1 into various shaped, and baked and dried as in Example 1 to form dry, hard, shelf stable, 1/2-inch thick, canine biscuits. The particles in the dried final biscuit were visably discrete, had not smeared and did not show any color bleed.

WHAT IS CLAIMED IS:

1. In a method for making a dry hard canine biscuit having discrete meat and/or meat by-product particles distributed substantially uniformly throughout the biscuit, from a final hard biscuit dough containing a non-fat solids portion which contains farinaceous material, an added fat portion and an added water portion, comprising:

(a) dry blending meat and/or meat by-product particles having a moisture content of less than or equal to about 35 percent by weight of the particles, with said non-fat solids portion of said final hard biscuit dough;

(b) admixing dry blended mixture (a) with a sufficient amount of said water portion of the hard biscuit dough to form a first stage hard biscuit dough;

(c) mixing a sufficient amount of said fat portion of the hard biscuit dough with said first stage hard biscuit dough to form said final hard biscuit dough;

(d)     forming said final hard biscuit dough into pieces; and

(e)     baking and drying said pieces to form a dry hard biscuit,

wherein the water activity of said particles in step (a) is less than the water activity of a final dough obtained by admixing said non-fat solids portion, said fat portion and said water without said particles, the improvement comprising conducting forming step (d) using low-shear, noncooking forming conditions, whereby a dry, hard biscuit is produced having discrete, visually apparent meat particles distributed substantially uniformly throughout.

2.   Method as claimed in Claim 1 wherein said meat and/or by-product particles are present in step (a) in an amount of about 3 to about 15 weight percent, based on the total weight of said dry hard canine biscuit, said particles of step (a) having a moisture content of less than or equal to about 20 percent by weight of said particles, wherein said added-water portion is present in step (b) in an amount of about 20 to 30 weight percent, based on the total weight of said final biscuit dough, wherein said added-fat portion is present in step (c) in an amount of about 1 to 5 weight percent, based on the total weight of said final biscuit dough, and wherein said pieces of step (d) are dried to a moisture content of 10 to 12 percent by weight of the biscuit.

3. Method as claimed in Claim 1 or Claim 2 wherein said particles are spiced, dehydrated, cured meat granules having a water activity of 0.70 or less.

4. Method as claimed in any one of Claims 1 to 3 wherein the water which is admixed with the dry blended mixture is at a temperature of about 65°F., wherein the fat portion of the biscuit dough is added at a temperature of about 100° to about 150°F., and wherein said dry blending is for a period of time of about 3 minutes to about 10 minutes, the dry blended mixture is mixed with water for a period of time of about 3 minutes to about 5 minutes, and said mixing in of the fat portion is for a period of time of about 3 minutes to about 5 minutes.

5. Method as claimed in any one of Claims 1 to 5 wherein said pieces are formed by sheeting said final dough followed by cutting with a vertical cutter or a rotary cutter.

6. Method as claimed in any one of Claims 1 to 5 wherein no fat is added in admixing step (a) except the indigenous fat which is present in said particles, wherein any forming pressure which is used in forming step (d) is less than 75 p.s.i.g., wherein, in admixing step (a), a substantially homogeneous dry blended mixture, wherein said dry hard biscuits are shelf-stable, and wherein said particles are incorporated into said biscuit dough from said final biscuit dough without any substantial smearing of the particles into the biscuit dough.

7. Method as claimed in any one of Claims 1 to 6 wherein said discrete particles also contain farinaceous material and/or textured vegetable protein.

8. Method as claimed in Claim 7 wherein the method is conducted as defined in any one or more of Claims 2 to 6.

9. Method as claimed in Claim 7 or Claim 8 wherein said particles contain up to 90 percent by weight of said farinaceous material and/or textured vegetable protein.

10. Method as claimed in any one of Claims 7 to 9 wherein said farinaceous material is wheat flour or wheat meal, or said textured vegetable protein is textured soy protein.

11. Dry hard canine biscuit having particles, which contain (i) meat and/or meat by-product and (ii) farinaceous material and/or textured vegetable protein, which are visually apparent as discrete particles obtained by the method of any one of Claims 7 to 10.

12. In a dry hard canine biscuit comprising discrete, visually apparent dehydrated particles, which contain meat and/or meat by-product and which are distributed substantially uniformly throughout said biscuit, the remaining portion of said biscuit being substantially free of meat particle color, said biscuit having a water activity of 0.70 or less, the improvement comprising the inclusion of farinaceous material and/or textured vegetable protein in said particles.

13. Canine biscuit as claimed in Claim 12 wherein the weight percent of said particles is between about 3 percent to about 15 percent by weight of the biscuit and wherein said particles have a granulation of between about 1/32 of an inch to about 1/2 of an inch.

14. In a process for preparing dry, cohesive particles, which contain meat and/or meat by-product, the improvement comprising:

(a) admixing the meat in particulate form and/or meat by-product in particulate form with farinaceous material in particulate form and/or textured vegetable protein;

(b) forming admixture (a) by mechanically working the mass at conditions of elevated temperature above about 100°C. and pressure for a time sufficient to convert the mass into a flowable substance and extruding the flowable substance through a restricted orifice;

(c) particulating the extrudate from step (b) into particles; and

(d) drying the particles to form said dry, cohesive particles.

15. Process as claimed in Claim 14 wherein the particulated meat is prepared by particulating frozen meat, wherein said particles contain up to 90 percent by weight of said farinaceous material and/or textured vegetable protein, wherein said farinaceous material is wheat, wherein said textured vegetable protein is soy protein, wherein forming step (c) is conducted in a cooker extruder, wherein step (c) is achieved using staggered cutting blades, and wherein the particles from step (c) are dried to a moisture content of less than or equal to about 20 percent by weight of the particles.

16. Process as claimed in Claim 14 or Claim 15 wherein seasoning and/or flavoring conponents in particulate form are fed in the form of an admixture containing a portion of the meat in particulate form and/or the meat by-product in particulate form into forming step (b) simultaneously with said admixture of the meat in particulate form and/or meat by-product in particulate form and the farinaceous material in particulate form and/or textured vegetable protein in particulate form.